# EUROPÄISCHE PATENTSCHRIFT

(11) **EP 3 915 358 B1**
(45) Veröffentlichungstag und Bekanntmachung des Hinweises auf die Patenterteilung: **16.08.2023**
(21) Anmeldenummer: 20176995.7
(22) Anmeldetag: 28.05.2020
(51) Int. Cl.: A01D 46/26

(54) **ARBEITSGERÄT**
WORK DEVICE
APPAREIL DE TRAVAIL

(43) Veröffentlichungstag der Anmeldung: 01.12.2021
(73) Patentinhaber: Andreas Stihl AG & Co. KG, 71336 Waiblingen (DE)
(72) Erfinder: Dangelmaier, Manuel, 73249 Wernau (DE); Sonnenkalb, Thomas, 30177 Hannover (DE); Günther, David, 73635 Rudersberg (DE); Kummermehr, Stefan, 73663 Berglen (DE)
(74) Vertreter: Reinhardt, Annette

(56) Entgegenhaltungen:
- EP-A1- 2 384 614
- EP-A2- 2 015 629
- EP-A2- 2 374 345
- CN-Y- 201 315 758
- GR-B- 1 006 031

## Beschreibung

Die Erfindung betrifft ein Arbeitsgerät der im Oberbegriff des Anspruchs 1 angegebenen Gattung.

Aus der EP 3 430 883 A1 ist ein Arbeitsgerät, nämlich ein Erntegerät für Oliven oder dergleichen bekannt, dessen Werkzeuge als Rechen mit Fingern ausgebildet sind. Im Betrieb werden die Rechen hin- und hergehend bewegt. Hierzu ist ein Exzenterantrieb vorgesehen, der über Pleuel mit den Rechen verbunden ist. Die Pleuel sind vollständig innerhalb eines Gehäuses angeordnet, in das die Rechen ragen. Dadurch ist die Abdichtung des Gehäuses aufwändig oder es muss eine unvollständige Abdichtung in Kauf genommen werden.

Aus der GR 2007 0100024 B geht ein Olivenerntegerät hervor, das über ein Kegelradgetriebe zwei Platten rotierend antreibt, die an gegenüberliegenden Seiten eines Gehäuses an der Antriebswelle fixiert sind. Die Platten tragen schräg angeordnete Arme mit nach außen ragenden Fingern zum Schütteln der Früchte.

Die CN 201315758 Y zeigt ein Pflückgerät für Früchte mit einem Finger, der über ein Pleuel hin und her schwenkend angetrieben ist.

Aus der EP 2 015 629 A2 geht ein Erntegerät hervor, das mehrere hin und her gehend angetriebene Rechen aufweist. Die Rechen ragen mit einem Abschnitt zu einem Exzenter im Gehäuse.

Bei der EP 2 374 345 A2 sind die Rechen eines Erntegeräts über Pleuel angetrieben. Die Pleuel ragen von dem innerhalb des Gehäuses angeordneten Getriebe durch eine Öffnung des Gehäuses zu den Rechen.

Die EP 2 384 614 A1 offenbart ein Erntegerät, bei dem zwei Rechen über Pleuel angetrieben sind. Die Rechen ragen mit dem angetriebenen Ende in ein Gehäuse des Arbeitsgeräts.

Der Erfindung liegt die Aufgabe zugrunde, ein Arbeitsgerät der gattungsgemäßen Art zu schaffen, das einen einfachen und robusten Aufbau aufweist.

Eine weitere Aufgabe der Erfindung besteht darin, ein Arbeitsgerät mit robustem Aufbau anzugeben.

Diese Aufgabe wird durch ein Arbeitsgerät mit den Merkmalen des Anspruchs 1 gelöst. Die Aufgabe wird auch gelöst durch ein Arbeitsgerät mit den Merkmalen des Anspruchs 13.

Gemäß Anspruch 1 ist vorgesehen, dass die Antriebswelle mit einem konzentrisch zur Drehachse verlaufenden Abschnitt aus dem Gehäuse austritt und dass der mindestens eine Exzenterabschnitt, der das mindestens eine Werkzeug hin- und hergehend antreibt, außerhalb des Gehäuses angeordnet ist. Der konzentrisch zur Drehachse verlaufende Abschnitt kann einfach abgedichtet werden, so dass eine Kapselung des Gehäuses auf einfache Weise möglich ist. Dadurch, dass der Exzenter außerhalb des Gehäuses angeordnet ist, muss dieser nicht abgedichtet werden.

Vorteilhaft ist der Gehäuseinnenraum des Gehäuses gegenüber der Umgebung abgedichtet. Ein einfacher Aufbau ergibt sich, wenn die Antriebswelle über mindestens ein Lager drehbar in dem Gehäuse gelagert ist und das Lager den Gehäuseinnenraum gegenüber der Umgebung abdichtet. Für die Lagerung der Antriebswelle kann somit ein gekapseltes Lager verwendet werden, so dass separate Dichtelemente entfallen.

Die Antriebswelle kann einteilig oder mehrteilig ausgebildet sein. Die Antriebswelle kann aus mehreren fest miteinander verbundenen Teilen oder aus drehfest miteinander verbundenen Elementen aufgebaut sein. Es kann auch vorgesehen sein, dass die gesamte Antriebswelle oder mindestens ein Teil der Antriebswelle einteilig mit einem weiteren Bauteil, beispielsweise einem Antriebsrad, das die Antriebswelle antreibt, ausgebildet ist.

Das Gehäuse ist vorteilhaft ein Getriebegehäuse, in dem ein Antriebselement ein drehfest mit der Antriebswelle verbundenes Antriebsrad antreibt. In einer Ausführungsvariante kann vorgesehen sein, dass das Antriebsrad ein Kegelrad ist. In alternativer Ausführungsvariante kann vorgesehen sein, dass das Antriebsrad ein Stirnrad ist. Auch eine andere Gestaltung des Antriebsrads kann vorteilhaft sein.

Bevorzugt sind mindestens zwei Werkzeuge vorgesehen, die über jeweils einen Exzenterabschnitt angetrieben sind. Die beiden Werkzeuge können dabei gleichlaufend oder gegenläufig hin- und hergehend angetrieben sein. Dies kann durch die Lage der Exzenterabschnitte zueinander konstruktiv vorgegeben sein. Dabei kann jede beliebige Winkellage der Exzenterabschnitte zueinander vorgesehen sein.

Vorteilhaft sind die beiden Exzenterabschnitte auf gegenüberliegenden Seiten des Gehäuses angeordnet. Besonders bevorzugt sind die beiden Exzenterabschnitte an zwei Antriebswellen ausgebildet. Jeder Exzenterabschnitt ist demnach an einer Antriebswelle ausgebildet. Dadurch ist die Fertigung der Exzenterabschnitte vereinfacht. Auch die Abdichtung ist dadurch einfach möglich.

In vorteilhafter alternativer Gestaltung ist vorgesehen, dass mindestens ein Exzenterabschnitt separat von dem konzentrisch zur Drehachse verlaufenden Abschnitt der Antriebswelle ausgebildet ist. Der Exzenterabschnitt ist insbesondere an dem konzentrisch zur Drehachse verlaufenden Abschnitt der Antriebswelle fixiert. Dadurch ist eine einfache Herstellung von Antriebswelle und Exzenterabschnitt gegeben. Vorteilhaft ist ein konzentrisch zur Drehachse verlaufender Abschnitt vorgesehen, der auf gegenüberliegenden Seiten des Gehäuses aus dem Gehäuse ragt. Dies ist insbesondere dann vorteilhaft, wenn zwei Exzenterabschnitte vorgesehen sind, die auf gegenüberliegenden Seiten des Gehäuses angeordnet sind.

Es kann vorgesehen sein, dass die Winkellage des Exzenterabschnitts an dem Antriebsrad einstellbar ist. Die Winkellage kann dabei bei der Fertigung des Arbeitsgeräts einstellbar sein, beispielsweise dadurch, dass konstruktiv mehrere unterschiedliche Winkellagen möglich sind. Es kann auch vorgesehen sein, dass der Exzenterabschnitt vom Bediener in seiner Winkellage zur Drehachse eingestellt werden kann.

Vorteilhaft ist die Antriebswelle in das Antriebsrad eingepresst. Es kann alternativ oder zusätzlich vorgesehen sein, dass die Antriebswelle mit dem Antriebsrad über eine unrunde Kontur, beispielsweise einen Mehrkant oder eine Verzahnung, drehfest verbunden ist. Auch eine einteilige Gestaltung von Antriebswelle und Antriebsrad kann vorgesehen sein.

Die Antriebswelle treibt das Werkzeug über ein Pleuel an, das schwenkbar am Werkzeug und an dem Exzenterabschnitt der Antriebswelle gelagert ist. Es sind zwei Pleuel vorgesehen, die jeweils ein Werkzeug antreiben. Eine geringe Baugröße wird erreicht, wenn der parallel zur Drehachse gemessene Abstand der Pleuel an den Verbindungen mit den Exzenterabschnitten größer ist als der parallel zur Drehachse gemessene Abstand der Pleuel an den Verbindungen mit den Werkzeugen. Die Pleuel sind vorteilhaft zum Gehäuse hin abgekröpft ausgebildet. Dadurch ist die Baubreite des Arbeitsgeräts an den Werkzeugen geringer als im Bereich der Exzenterabschnitte. Dadurch wird das Arbeiten mit dem Arbeitsgerät erleichtert. Es ergibt sich ein schlanker Aufbau.

In vorteilhaft alternativer Gestaltung ist vorgesehen, dass der parallel zur Drehachse gemessene Abstand der beiden Pleuel an den Verbindungen mit den Exzenterabschnitten und der parallel zur Drehachse gemessene Abstand der Pleuel an den Verbindungen mit den Werkzeugen gleich groß sind. Dadurch können einfach gestaltete, flache Pleuel zum Einsatz kommen. Es ergibt sich ein einfacher Aufbau. Die beiden Pleuel sind auf gegenüberliegenden Seiten des Gehäuses angeordnet. Die beiden Pleuel liegen sich bezogen auf die Längsmittelachse des Werkzeugkopfs vorteilhaft etwa diametral gegenüber.

Für derartige Arbeitsgeräte ist es bekannt, als Werkzeuge Rechen mit länglichem oder T-förmigem Grundkörper vorzusehen. Um einen robusten Aufbau des Arbeitsgeräts bei geringem Gewicht zu erhalten, ist vorgesehen, dass das Werkzeug einen Grundkörper, einen Betätigungsabschnitt und eine Verbindungstruktur aufweist. Der Grundkörper ist an einem Schwenkgelenk um eine erste Schwenkachse schwenkbar gelagert. Am Betätigungsabschnitt ist ein mit dem Exzenterabschnitt verbundenes Pleuel um eine zweite Schwenkachse schwenkbar gelagert. Die Verbindungsstruktur weist vorteilhaft zwei Arme auf, die den Betätigungsabschnitt mit dem Grundkörper verbinden. Die Anbindungsstellen der Arme an dem Grundkörper weisen vorteilhaft einen Abstand zueinander auf, der mindestens 25 % der Länge des Grundkörpers entspricht. Diese Gestaltung des Werkzeugs bildet einen eigenständigen erfinderischen Gedanken, der von der Gestaltung des Antriebs der Werkzeuge unabhängig ist.

Durch die Gestaltung des Werkzeugs mit einem Grundkörper, der über zwei Arme mit dem Betätigungsabschnitt verbunden ist, wird eine gute Krafteinleitung von dem Betätigungsabschnitt in den Grundkörper erreicht. Aufgrund der beiden Arme, die einen Abstand von mindestens 25 % der Länge des Grundkörpers zueinander aufweisen, wird unabhängig von der Betätigungsrichtung einer der Arme auf Druck beansprucht, so dass sich eine günstige Krafteinleitung in den Grundkörper ergibt. Es ergibt sich ein einfacher und robuster Aufbau.

Vorteilhaft sind die Anbindungsstellen spiegelsymmetrisch zu einer Symmetrieebene angeordnet, die die erste Schwenkachse des Werkzeugs und die zweite Schwenkachse des Betätigungsabschnitts umfasst. Dadurch wird eine symmetrische Krafteinleitung in den Grundkörper ermöglicht.

Ausführungsbeispiele der Erfindung werden im Folgenden anhand der Zeichnung erläutert. Es zeigen:
- Fig. 1: eine schematische perspektivische Darstellung eines Arbeitsgeräts,
- Fig. 2: eine perspektivische Darstellung eines Werkzeugkopfs des Arbeitsgeräts aus Fig. 1,
- Fig. 3: eine Draufsicht auf den Werkzeugkopf aus Fig. 2,
- Fig. 4: einen Schnitt entlang der Linie IV-IV in Fig. 3,
- Fig. 4a: eine vergrößerte ausschnittsweise Darstellung des Bereichs der Antriebswellen aus Fig. 4,
- Fig. 5: eine ausschnittsweise Seitenansicht des Werkzeugkopfs in Richtung des Pfeils V in Fig. 3,
- Fig. 6: einen Schnitt entlang der Linie VI-VI in Fig. 5,
- Fig. 7: eine perspektivische Darstellung einer alternativen Konfiguration des Werkzeugkopfs der vorangegangenen Figuren,
- Fig. 8: eine Draufsicht auf den Werkzeugkopf in der in Fig. 7 dargestellten Konfiguration,
- Fig. 9: einen Schnitt entlang der Linie IX-IX in Fig. 8,
- Fig. 10: eine ausschnittsweise Seitenansicht des Werkzeugkopfs aus Fig. 8,
- Fig. 11: einen Schnitt entlang der Linie XI-XI in Fig. 10,
- Fig. 12: eine perspektivische Darstellung einer alternativen Ausführung eines Werkzeugkopfs,
- Fig. 13: eine ausschnittsweise Draufsicht auf den Werkzeugkopf aus Fig. 12 in der voneinander weg geschwenkten Position der Rechen,
- Fig. 14: einen Schnitt entlang der Linie XIV-XIV in Fig. 13,
- Fig. 15: eine ausschnittsweise Draufsicht auf den Werkzeugkopf aus Fig. 12 in der aufeinander zu geschwenkten Position der Rechen,
- Fig. 16: einen Schnitt entlang der Linie XVI-XVI in Fig. 15,
- Fig. 17: eine ausschnittsweise Seitenansicht des Werkzeugkopfs aus Fig. 13 in Blickrichtung des Pfeils XVII in Fig. 13,
- Fig. 18: einen Schnitt durch den Werkzeugkopf entlang der Linie XVIII-XVIII in Fig. 17.

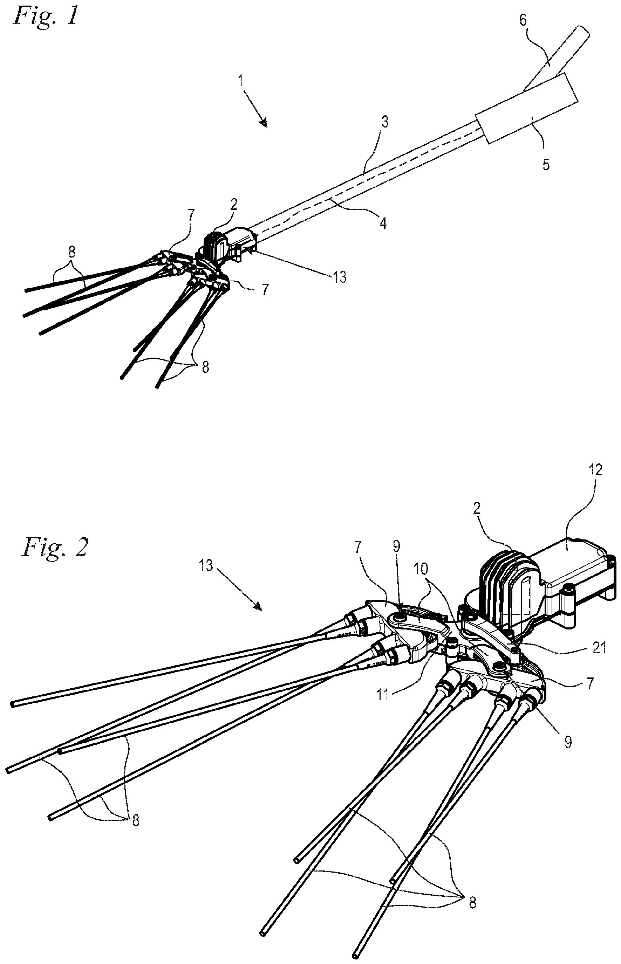

Fig. 1 zeigt schematisch ein Arbeitsgerät 1. Das Arbeitsgerät 1 ist im Ausführungsbeispiel ein Erntegerät, nämlich ein Olivenschüttler. Das Arbeitsgerät kann auch ein anderes Arbeitsgerät mit mindestens einem hin- und hergehend angetriebenen Werkzeug, vorzugsweise ein anderes Erntegerät, sein. Das Arbeitsgerät 1 weist einen Schaft 3 auf, der ein Werkzeuggehäuse 5 mit einem Werkzeugkopf 13 verbindet. Bei dem Arbeitsgerät 1 handelt es sich demnach um ein Arbeitsgerät mit langem Schaft. Am Werkzeuggehäuse 5 ist ein Handgriff 6 zum Führen des Arbeitsgeräts im Betrieb angeordnet. Es kann alternativ oder zusätzlich vorgesehen sein, dass ein oder mehrere Handgriffe benachbart zum Werkzeuggehäuse 5 am Schaft 3 angeordnet sind.

Im Ausführungsbeispiel ist im Werkzeuggehäuse 5 ein nicht dargestellter Akku angeordnet, der über ein schematisch dargestelltes, durch den Schaft 3 geführtes Kabel 4 mit einem Antriebsmotor 2 verbunden ist. Der Antriebsmotor 2 ist im Werkzeugkopf 13 angeordnet. In alternativer Ausführung kann vorgesehen sein, dass der Antriebsmotor 2 im Werkzeuggehäuse 5 angeordnet und über eine Antriebsverbindung, beispielsweise eine durch den Schaft 3 geführte, rotierend angetriebene Welle, mit dem Werkzeugkopf 13 verbunden ist. Im Ausführungsbeispiel ist der Antriebsmotor 2 ein Elektromotor. Der Antriebsmotor 2 kann jedoch auch ein Verbrennungsmotor, insbesondere ein gemischgeschmierter Einzylindermotor, sein.

Am Werkzeugkopf 13 sind hin- und hergehend angetriebene Werkzeuge angeordnet. Im Ausführungsbeispiel sind zwei Werkzeuge vorgesehen, die als Rechen 7 ausgebildet sind. Bei einer anderen Gestaltung des Arbeitsgeräts 1 kann auch mindestens ein anderes Werkzeug, beispielsweise ein Haken, eine Sichel oder dgl. vorgesehen sein. Jeder Rechen 7 weist mehrere vom Schaft 3 wegragende Finger 8 auf. Die Finger 8 greifen im Betrieb zwischen Äste eines Baumes, beispielsweise eines Olivenbaums und schütteln diese, so dass die zu erntenden Früchte abfallen.

Fig. 2 zeigt den Werkzeugkopf 13 in vergrößerter Darstellung. Der Werkzeugkopf 13 weist ein Gehäuse 11 auf. Im Ausführungseispiel ist der Antriebsmotor 2 im Gehäuse 11 angeordnet. Das Gehäuse 11 weist einen Befestigungsabschnitt 12 auf, mit dem das Gehäuse 11 auf dem Schaft 3 vorteilhaft klemmend gehalten ist. Das Gehäuse 11 weist im Ausführungsbeispiel zwei Arme 10 auf. Die Arme 10 können auch separat vom Gehäuse 11 ausgebildet und fest mit diesem verbunden sein. An den Armen 10 sind die Rechen 7 mit Schwenkgelenken 9 schwenkbar gelagert. Zum hin- und hergehenden Antrieb der Rechen 7 um die Schwenkgelenke 9 sind Pleuel 21 vorgesehen. Im Ausführungsbeispiel ist für jeden Rechen 7 ein Pleuel 21 vorgesehen. Die Pleuel 21 sind auf gegenüberliegenden Seiten des Gehäuses 11 angeordnet, so dass in Fig. 2 lediglich eines der beiden Pleuel 21 sichtbar ist.

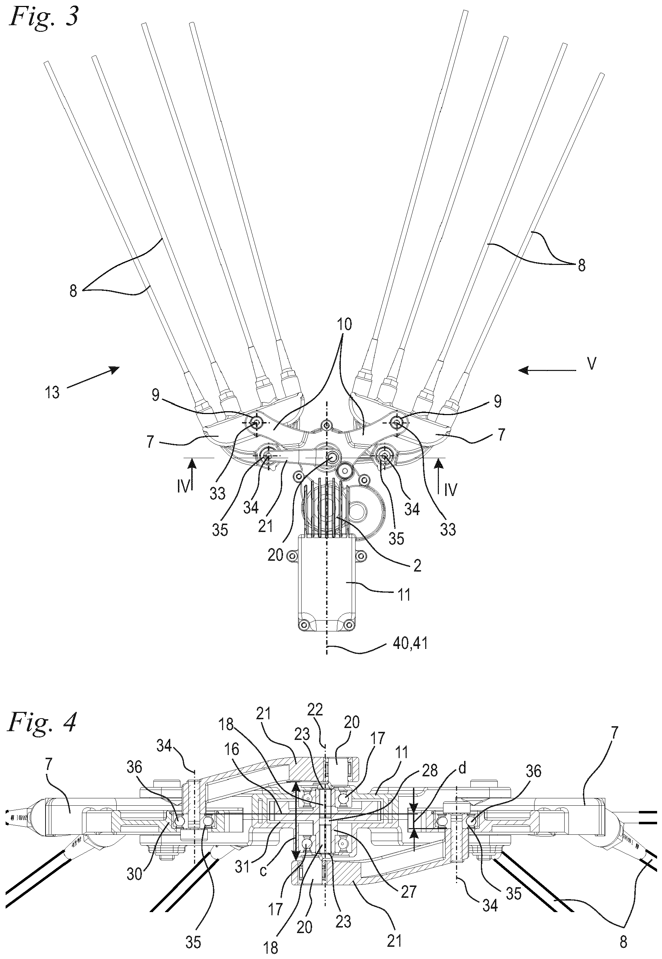

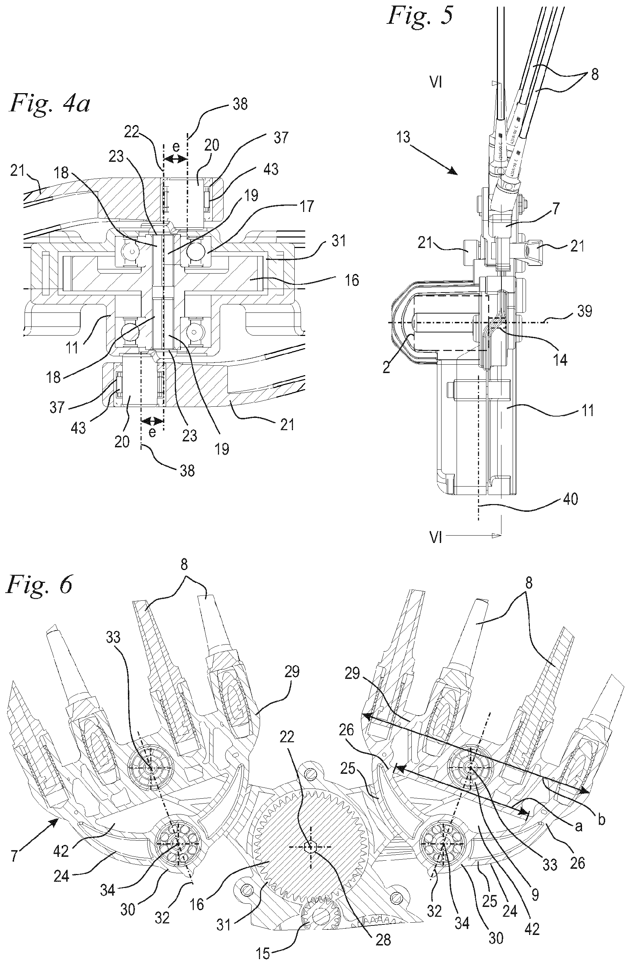

Fig. 3 zeigt den Werkzeugkopf 13 in Draufsicht. Wie die Fig. 3 zeigt, ist jeder Rechen 7 an einem Schwenkgelenk 9 um eine Schwenkachse 33 gegenüber dem Gehäuse 11 schwenkbar gelagert. Jeder Rechen 7 besitzt außerdem ein zweites Schwenkgelenk 35, an dem der Rechen 7 mit einem Pleuel 21 um eine Schwenkachse 34 schwenkbar gekoppelt ist. Der Werkzeugkopf 13 weist eine Längsmittelachse 40 auf. Die Längsmittelachse 40 liegt vorteilhaft in Verlängerung der Längsmittelachse des Schafts 3 (Fig. 1). Die Längsmittelachse 40 liegt in einer Symmetrieebene 41. Die Symmetrieebene 41 wird von der Längsmittelachse 40 und einer in Fig. 4 gezeigten Drehachse 22 einer Antriebswelle 18 aufgespannt. Die beiden Arme 10 sind symmetrisch zur Symmetrieebene 41 angeordnet. Im Ausführungsbeispiel sind auch die Schwenkachsen 34 und die Schwenkgelenke 35 der beiden Rechen 7 symmetrisch zur Symmetrieebene 41 angeordnet. Die beiden Schwenkachsen 34 weisen vorteilhaft in mindestens einer Stellung, insbesondere in jeder Stellung den gleichen Abstand zur Symmetrieebene 41 auf.

Im Ausführungsbeispiel liegen die Schwenkgelenke 9 zwischen den Schwenkgelenken 35 und den Fingern 8. Auch eine umgekehrte Anordnung, bei der die Schwenkgelenke 35 zwischen den Schwenkgelenken 9 und den Fingern 8 liegen, die Schwenkgelenke 9 also näher am Schaft 3 liegen als die Schwenkgelenke 35, kann vorteilhaft sein.

Fig. 4 zeigt den Antrieb der Rechen 7 im Einzelnen. Beide Pleuel 21 sind vollständig außerhalb des Gehäuses 11 angeordnet. Die Pleuel 21 verlaufen dabei auf gegenüberliegenden Seiten des Gehäuses 11. Die Schwenkgelenke 35 sind jeweils an einem Betätigungsabschnitt 30 der Rechen 7 angeordnet, wie im Folgenden noch näher beschrieben wird. Die Schwenklager 35 sind vorteilhaft an einem Lager 36, im Ausführungsbeispiel einem Kugellager, ausgebildet. Auch eine andere Gestaltung der Schwenklager 35 kann jedoch vorteilhaft sein.

Das andere Ende jedes Pleuels 21 ist jeweils an einem Schwenkgelenk 37 schwenkbar an einem Exzenterabschnitt 20 gelagert. Der Exzenterabschnitt 20 ist Teil einer Antriebswelle 18. Die Antriebswelle 18 ist von einem Antriebsrad 16 um eine Drehachse 22 rotierend angetrieben. Das Antriebsrad 16 ist in einem Gehäuseinnenraum 31 des Gehäuses 11 angeordnet. Der Exzenterabschnitt 22 ist außerhalb des Gehäuses 11 angeordnet. Die Antriebswelle 18 kann mehrteilig ausgeführt sein. Im Ausführungsbeispiel ist für jedes Pleuel 21 eine separate Antriebswelle 18 vorgesehen. Auch eine gemeinsame Antriebswelle 18 kann jedoch vorteilhaft sein. Im Ausführungsbeispiel weist die Antriebswelle 18 einen Antriebsabschnitt 19 auf, mit dem die Antriebswelle 18 drehfest mit dem Antriebsrad 16 verbunden ist. Das Antriebsrad 16 weist eine Nabe 27 auf. In die Nabe 27 sind die Antriebsabschnitte 19 der Antriebswellen 18 von gegenüberliegenden Seiten eingepresst. In der Nabe 27 ist eine Aufnahme 28 ausgebildet, in die die Antriebsabschnitte 19 der Antriebswellen 18 eingepresst sind. An der Nabe 27 ist das Antriebsrad 16 mit Lagern 17 drehbar um die Drehachse 22 gelagert. Auch eine andere Gestaltung der Antriebswellen 18 und des Antriebsrads 16 kann vorteilhaft sein. Das Antriebsrad 16 kann auch mehrteilig ausgebildet sein. Auch eine einteilige Gestaltung des Antriebsrads 16 mit einer oder mit beiden Antriebswellen 18 oder mit Teilen der Antriebswellen 18 kann vorteilhaft sein.

Die Lager 17 sind im Ausführungsbeispiel dichtend ausgeführt und dichten den Gehäuseinnenraum 31 gegenüber der Umgebung ab. Hierzu weisen die Lager 17 integrierte Dichtscheiben auf. Auch eine andere Gestaltung der Abdichtung des Gehäuseinnenraums 31 gegenüber der Umgebung, beispielsweise mittels separater Dichtungen, kann vorteilhaft sein.

Wie Fig. 4 zeigt, ragen die Exzenterabschnitte 20 der Antriebswellen 18 auf gegenüberliegenden Seiten aus dem Gehäuse 11. Das Gehäuse 11 liegt in axialer Richtung der Drehachse 22 zwischen den beiden Exzenterabschnitten 20 und zwischen den beiden Pleueln 21. Im Bereich des Gehäuses 11 weisen die Pleuel 21 einen Abstand c zueinander auf. Der Abstand c ist dabei im Bereich der Schwenkgelenke 37 der beiden Pleuel 21 parallel zur Drehachse 22 gemessen. Die Pleuel 21 sind jeweils abgekröpft ausgeführt und ragen im Bereich der Schwenkachsen 34 weiter aufeinander zu. Der parallel zur Drehachse 22 gemessene Abstand d zwischen den Pleueln 21 im Bereich der Schwenkgelenke 35 ist kleiner als der Abstand c. Der Abstand d kann beispielsweise weniger als die Hälfte des Abstands c betragen.

Wie die vergrößerte ausschnittsweise Darstellung in Fig. 4a zeigt, ragen die Antriebswellen 18 jeweils mit einem Abschnitt 23 aus dem Gehäuse 11. Der Abschnitt 23 ist koaxial zur Antriebswelle 22 ausgebildet. Der Abschnitt 23 ist vorteilhaft vom aus dem Gehäuse 11 ragenden Ende des Antriebsabschnitts 19 gebildet. Der Exzenterabschnitt 20 ist vollständig außerhalb des Gehäuses 11 angeordnet. Dadurch, dass der Exzenterabschnitt 20 vollständig außerhalb des Gehäuses 11 angeordnet ist, ist eine einfache Abdichtung der Antriebswelle 18 gegenüber der Umgebung möglich. Dadurch kann der Gehäuseinnenraum 31 gekapselt gegenüber der Umgebung ausgeführt werden. Dadurch ist eine gute Schmierung des Antriebsrads 16 sowie eines in Fig. 4a nicht dargestellten Getriebes möglich. Wie Fig. 4a auch zeigt, ist das Schwenkgelenk 37 im Ausführungsbeispiel an einem Lager 43, insbesondere einem Nadellager, ausgebildet.

Wie Fig. 4a auch zeigt, weist der Exzenterabschnitt 20 eine Mittelachse 38 auf. Die Mittelachse 38 verläuft parallel zur Drehachse 22 und in einem Abstand e zur Drehachse 22. Der Abstand e entspricht der Exzentrizität des Exzenterabschnitts 20. Die beiden Exzenterabschnitte 20 liegen bei Blickrichtung in Richtung der Drehachse 22 bezogen auf die Drehachse 22 einander etwa gegenüber. Die Mittelachsen 38 der Exzenterabschnitte weisen um die Drehachse 22 einen Winkelabstand von etwa 180° zueinander auf. Auch ein anderer Winkelabstand der Mittelachsen 38 kann jedoch vorteilhaft sein. Der Winkelabstand zwischen den Mittelachsen 38 ist im Ausführungsbeispiel so gewählt, dass die Rechen 7 sich gegenläufig zueinander bewegen.

Wie Fig. 5 schematisch zeigt, weist der Antriebsmotor 2 eine Motorwelle 14 auf, die um eine Antriebsachse 39 rotierend angetrieben ist. Im Ausführungsbeispiel liegt die Antriebsachse 39 senkrecht zur Längsmittelachse 40 des Werkzeugkopfs 13.

Wie Fig. 6 zeigt, ist das Antriebsrad 16 von einem Antriebsritzel 15 rotierend angetrieben. Das Antriebsritzel 15 kann unmittelbar drehfest mit der Motorwelle 14 verbunden sein. In alternativer Gestaltung können weitere Antriebsräder in Wirkverbindung zwischen der Motorwelle 14 und dem Antriebsritzel 15 angeordnet sein. Im Ausführungsbeispiel sind das Antriebsrad 16 und das Antriebsritzel 15 als Stirnräder ausgebildet. Auch eine Gestaltung als Kegelräder kann jedoch vorteilhaft sein. Dies ist insbesondere vorteilhaft, wenn die Antriebsachse 39 des Antriebsmotors 2 (Fig. 5) parallel zur Längsmittelachse 40 des Werkzeugkopfs 13 liegt.

Fig. 6 zeigt auch die Gestaltung der Rechen 7 im Einzelnen. Jeder Rechen 7 ist symmetrisch zu einer Symmetrieebene 32 ausgebildet, die die Schwenkachsen 33 und 34 enthält. Die Rechen 7 weisen einen Grundkörper 29 auf, der mit dem Betätigungsabschnitt 30 fest verbunden ist. Am Grundkörper 29 sind die Finger 8 des Rechens 7 einzeln gehalten. Der Grundkörper 29 kann auch einen Rechenträger bilden, an dem ein Fingerträger mit mehreren Fingern gehalten ist.

Der Betätigungsabschnitt 30 ist im Ausführungsbeispiel mit dem Grundkörper 29 über eine Verbindungsstruktur 24 verbunden, die durch zwei Arme 25 gebildet ist. Die beiden Arme 25 ragen auf gegenüberliegenden Seiten von dem Betätigungsabschnitt 30 weg zum Grundkörper 29. Die beiden Arme 25 sind an Anbindungsstellen 26 mit dem Grundkörper 29 verbunden. Die Anbindungsstellen 26 weisen einen Abstand a zueinander auf. Der Abstand a ist senkrecht zur Symmetrieebene 32 gemessen. Aufgrund des Abstands a der Anbindungsstellen 26 ist zwischen dem Grundkörper 29, den beiden Armen 25 und dem Betätigungsabschnitt 30 eine Öffnung 42 gebildet. Die Arme 25 sind im Ausführungsbeispiel gebogen ausgebildet und am Betätigungsabschnitt 30 breiter ausgeführt als am Grundkörper 29. Der Grundkörper 29 weist eine Länge b auf, die im Ausführungsbeispiel größer ist als der Abstand a. Der Abstand a zwischen den beiden Anbindungsstellen 26 bewirkt eine günstige Krafteinleitung in den Grundkörper 29. Jeweils einer der Arme 25 ist auf Druck belastet und der andere der Arme 25 auf Zug. Eine Biegebelastung, die im Bereich der Anbindungsstelle zu einer Kerbwirkung führen könnte, wird weitgehend vermieden.

Der Abstand a beträgt vorteilhaft mindestens 25 % der Länge b des Grundkörpers 29. Bevorzugt beträgt der Abstand a mindestens 50 %, insbesondere mindestens 70 % der Länge b des Grundkörpers 29. Dadurch wird eine günstige Krafteinleitung erreicht. Die Anbindungsstellen 26 sind vorteilhaft spiegelsymmetrisch zur Symmetrieebene 32 ausgebildet und angeordnet. Auch die Arme 25 sind spiegelsymmetrisch zur Symmetrieebene 32 ausgebildet.

Wie Fig. 6 zeigt, ist die Aufnahme 28 im Antriebsrad 16 unrund, im Ausführungsbeispiel als Sechskant ausgebildet. Dadurch ist eine hohe Drehmomentübertragung des Antriebsrads auf die Antriebswellen 18 auf einfache Weise möglich.

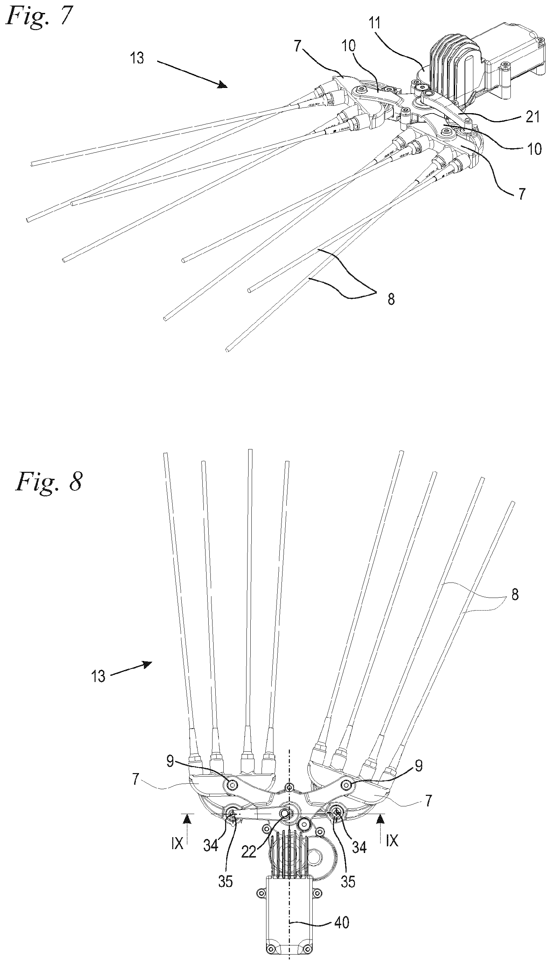

Im Ausführungsbeispiel nach den Figuren 1 bis 6 sind die beiden Exzenterabschnitte 20 der Antriebswellen 18 so ausgerichtet, dass die Rechen 7 gegensinnig schwenken. Die Rechen 7 bewegen sich demnach immer aufeinander zu oder voneinander weg. Die Figuren 7 bis 11 zeigen eine alternative Ausführung, bei der sich die Rechen 7 immer in der gleichen Richtung bewegen. Die Relativbewegung der beiden Rechen zueinander kann durch Einstellung der Winkellage der Exzenterabschnitte 20 zu den Antriebsabschnitten 19 in gewünschter Weise eingestellt werden.

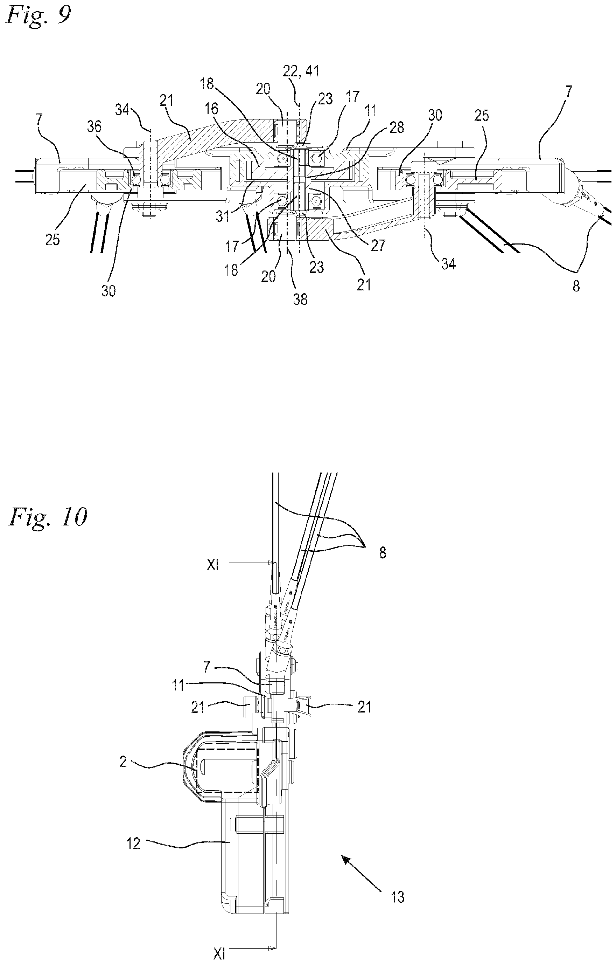

Der Aufbau des Werkzeugkopfs 13 in den Fig. 7 bis 11 entspricht dem Aufbau des Werkzeugkopfs 13 in den Fig. 1 bis 6. Gleiche Bezugszeichen kennzeichnen in allen Ausführungsbeispielen einander entsprechende Bauteile. Beim Ausführungsbeispiel nach den Fig. 7 bis 11 sind die Exzenterabschnitte 20 koaxial zueinander angeordnet. Der Abstand der Mittelachsen 38 zur Symmetrieebene 41 des Werkzeugkopfs 13 ist in jeder Stellung des Antriebsrads 16 gleich, wie Fig. 9 zeigt. Wie Fig. 8 zeigt, liegen die Antriebswelle 22 und die Schwenkachsen 34 näherungsweise in einer Ebene.

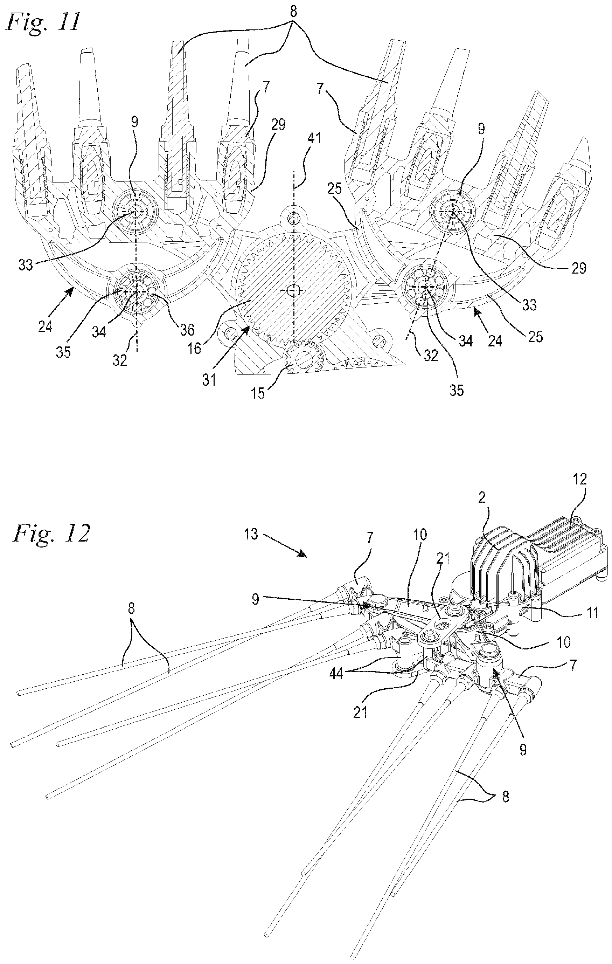

Wie die Fig. 8 und 11 zeigen, ist in der dargestellten Totpunktlage einer der Rechen 7 maximal nach außen von der Symmetrieebene 41 weg geschwenkt, während der andere Rechen 7 maximal zur Symmetrieebene 41 hin geschwenkt ist. Die Rechen 7 bewegen sich aufgrund der Lage der Exzenterabschnitte 20 zueinander immer in der gleichen Richtung.

Auch jedes andere Bewegungsmuster der Rechen 7 zueinander kann durch entsprechende Anordnung der Antriebswellen 18 eingestellt werden. In Fig. 10 ist auch die Lage der Pleuel 21 auf gegenüberliegenden Seiten des Gehäuses 11 erkennbar. Es kann auch vorgesehen sein, dass beide Pleuel 21 auf der gleichen Seite des Gehäuses 11 angeordnet sind.

In alternativer Ausführung ist vorgesehen, dass die Lage der Schwenkgelenke 9 und 35 vertauscht ist. Die Pleuel 21 sind bei dieser alternativen Ausführung demnach am Grundkörper 29 angebunden und die Arme 10 am Betätigungsabschnitt 30, der dadurch still steht. Die Rechen schwenken um die Schwenkachsen 34, und die Lage der Schwenkachsen 33 gegenüber dem Gehäuse 11 wird über die Pleuel 21 verändert, so dass die Schwenkbewegung der Rechen 7 entsteht.

Die Figuren 12 bis 18 zeigen ein alternatives Ausführungsbeispiel für den Werkzeugkopf 13 des Arbeitsgeräts 1, insbesondere des Erntegeräts. Gleiche Bezugszeichen bezeichnen dabei bei beiden Ausführungsbeispielen einander entsprechende Elemente.

Der in Fig. 12 perspektivisch dargestellte Werkzeugkopf 13 weist zwei Rechen 7 auf, an denen jeweils Finger 8 gehalten sind. Die Rechen 7 sind in der Darstellung in Fig. 12 in einer voneinander weg geschwenkten Lage gezeigt. Die Rechen 7 sind mittels Schwenkgelenken 9 an Armen 10 des Gehäuses 11 schwenkbar gelagert. Auf gegenüberliegenden Seiten des Gehäuses 11 sind die beiden Pleuel 21 angeordnet. Die beiden Pleuel 21 sind an Domen 44 der Rechen 7 fixiert.

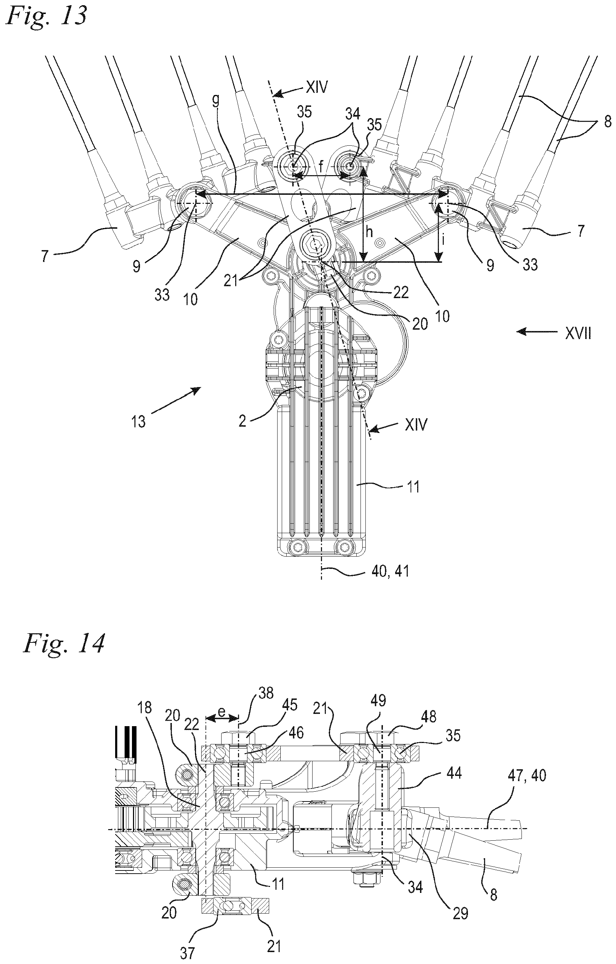

Fig. 13 zeigt die Anordnung der Arme 10 und der Pleuel 21 im Einzelnen. Die ersten Schwenkachsen 33 der Schwenkgelenke 9 besitzen einen Abstand g zueinander. Die zweiten Schwenkachsen 34, an denen die Pleuel 21 an den Rechen 7 gelagert sind, weisen einen Abstand f zueinander auf. Wie Fig. 13 zeigt, ist der Abstand f kleiner als der Abstand g. Im Ausführungsbeispiel ist der Abstand f für jede Schwenklage der Rechen 7 kleiner als der Abstand g, insbesondere kleiner als die Hälfte des Abstands g. Die Schwenkachsen 34 weisen in der dargestellten Schwenklage zur Drehachse 22 einen parallel zur Längsmittelachse 40 gemessenen Abstand h auf. Die ersten Schwenkachsen 33 weisen zur Drehachse 22 einen parallel zur Längsmittelachse 40 gemessenen Abstand i auf. Der Abstand i ist im Ausführungsbeispiel in der nach außen geschwenkten Stellung der beiden Rechen 7 kleiner als der Abstand h. Die Schwenkachsen 33 sind in einem mittleren Bereich der Rechen 7, im Ausführungsbeispiel zwischen den beiden mittleren der Finger 8, angeordnet.

Im Ausführungsbeispiel kragen die Dome 44 in Richtung der Drehachse 22 der Antriebswelle 18 aus, wie Fig. 14 zeigt. Die Grundkörper 29 der Rechen 7 verlaufen in einer gemeinsamen Ebene 47, die in Fig. 14 dargestellt ist. Die Ebene 47 verläuft vorteilhaft parallel zur Längsmittelachse 40. Vorteilhaft enthält die Ebene 47 die Längsmittelachse 40 oder ist in geringem Abstand, insbesondere einem Abstand von weniger als 5 cm zur Ebene 40 angeordnet. Einige der Finger 8 verlaufen im Ausführungsbeispiel in der Ebene 47 und einige der Finger 8 verlaufen geneigt zur Ebene 47. Auch eine andere Ausrichtung der Finger 8 zur Ebene 47 kann vorteilhaft sein. Wie Fig. 14 auch zeigt, verlaufen die Pleuel 21 auf gegenüberliegenden Seiten der Ebene 47. Die Pleuel 21 sind im Ausführungsbeispiel eben ausgebildet und verlaufen parallel zur Ebene 47. Die Pleuel 21 verlaufen insbesondere parallel zur Längsmittelachse 40.

Fig. 14 zeigt auch die Gestaltung der Exzenterabschnitte 20 und der Schwenkgelenke 37 im Einzelnen. Die Exzenterabschnitte 20 sind separat von der Antriebswelle 18 ausgebildet und an dieser fixiert. Im Ausführungsbeispiel umfassen die Exzenterabschnitte 20 jeweils eine Schelle 52 und eine Befestigungsschraube 45. Das Schwenkgelenk 37, mit dem das Pleuel 21 an dem Exzenterabschnitt 20 gelagert ist, ist an der Befestigungsschraube 45 gebildet, die in die Schelle 52 des Exzenterabschnitts 20 eingeschraubt ist. Die Befestigungsschraube 45 weist im Ausführungsbeispiel einen Lagerbund 46 auf, an dem das Pleuel 21 im Ausführungsbeispiel über ein Wälzlager gelagert ist.

Wie Fig. 14 zeigt, ist das Schwenkgelenk 35 an einer Befestigungsschraube 48 gebildet, die in den Dom 44 des zugeordneten Rechens 7 eingeschraubt ist. Die Befestigungsschraube 48 weist einen Lagerbund 49 auf, an dem das Pleuel 21 über ein Wälzlager gelagert ist.

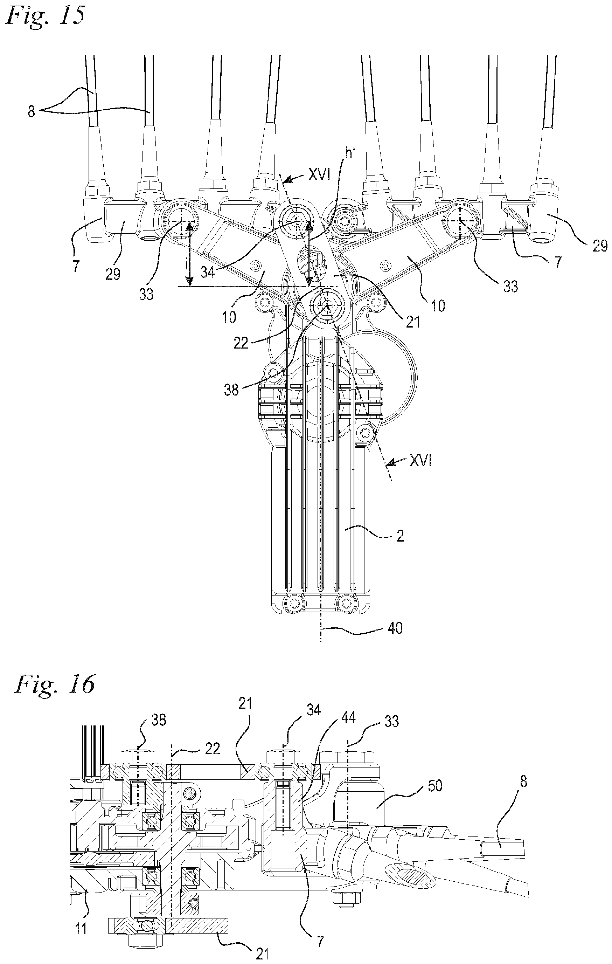

Fig. 15 zeigt die beiden Rechen 7 in der aufeinander zu geschwenkten Endlage. Der parallel zur Längsmittelachse 40 gemessene Abstand h' der zweiten Schwenkachse 34 zur Drehachse 22 hat sich gegenüber der in Fig. 13 dargestellten Rechenposition aufgrund der Drehbewegung der Antriebswelle 22 und der Exzenterabschnitte 20 (Fig. 14) verringert. Der Abstand h' der zweiten Schwenkachse 34 zur Drehachse 22 kann in dieser Lage der Rechen kleiner als der Abstand i der ersten Schwenkachse 33 zur Drehachse 22 sein. In der dargestellten Endlage verlaufen die Grundkörper 29 der beiden Rechen 7 vorteilhaft etwa senkrecht zur Längsmittelachse 40.

Fig. 16 zeigt einen Schnitt durch die Schwenkachsen 38 und 34 eines Pleuels 21 in der aufeinander zu geschwenkten Lage der Rechen 7 gemäß Fig. 15.

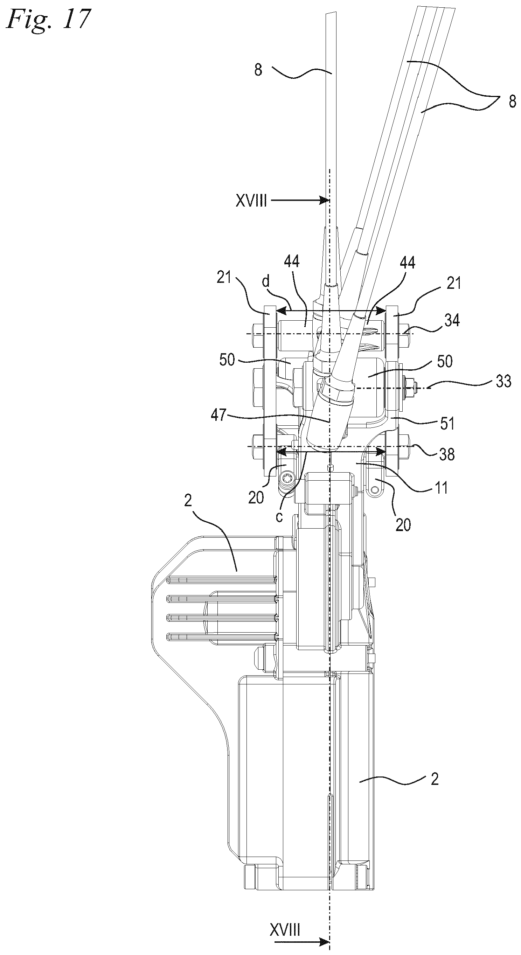

In der in Fig. 17 dargestellten Seitenansicht ist die Ausrichtung der beiden Pleuel 21 parallel zur Ebene 47 der Rechen 7 gut erkennbar. Die beiden Pleuel 21 besitzen an den Verbindungen mit den Exzenterabschnitten 20 einen parallel zur Drehachse 22 gemessenen Abstand c. An den Verbindungen mit den Rechen 7 weisen die beiden Pleuel 21 einen Abstand d zueinander auf. Die Abstände c und d sind in dem in den Figuren 12 bis 18 dargestellten Ausführungsbeispiel gleich groß. An den ersten Schwenklagern 33 weisen die Rechen 7 Lagerdome 50 auf, die seitlich auskragen. Das Gehäuse 11 weist an jeder Seite einen Abschnitt 51 auf, der seitlich auskragt und an dem ein Rechen 7 mit seinem Lagerdom 50 gelagert ist.

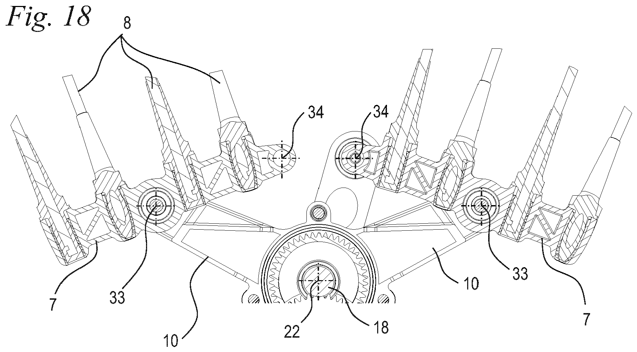

An den Abschnitten 51 sind die in Fig. 18 gezeigten ersten Schwenkachsen 33 ausgebildet. Fig. 18 zeigt auch die Lage der ersten und zweiten Schwenkachsen 33 und 34 und die Lage der Drehachse 22.

## Patentansprüche

1. Arbeitsgerät mit einem Antriebsmotor (2), der mindestens eine in einem Gehäuse (11) um eine Drehachse (22) drehbar gelagerte Antriebswelle (18) antreibt, wobei die Antriebswelle (18) mindestens einen Exzenterabschnitt (20) aufweist, der ein Werkzeug hin- und hergehend antreibt,
wobei die Antriebswelle (18) mit einem konzentrisch zur Drehachse (22) verlaufenden Abschnitt (23) aus dem Gehäuse (11) austritt, wobei der mindestens eine Exzenterabschnitt (20) außerhalb des Gehäuses (11) angeordnet ist und wobei die Antriebswelle (18) das Werkzeug über ein Pleuel (21) antreibt, das schwenkbar am Werkzeug und an dem Exzenterabschnitt (20) der Antriebswelle (18) gelagert ist,
**dadurch gekennzeichnet, dass** zwei Pleuel (21) vorgesehen sind, die jeweils ein Werkzeug antreiben und dass die zwei Pleuel (21) auf gegenüberliegenden Seiten des Gehäuses (11) angeordnet sind.

2. Arbeitsgerät nach Anspruch 1,
**dadurch gekennzeichnet, dass** der Gehäuseinnenraum (31) des Gehäuses (11) gegenüber der Umgebung abgedichtet ist.

3. Arbeitsgerät nach Anspruch 2,
**dadurch gekennzeichnet, dass** die Antriebswelle (18) über mindestens ein Lager (17) drehbar in dem Gehäuse (11) gelagert ist, wobei das Lager (17) den Gehäuseinnenraum (31) gegenüber der Umgebung abdichtet.

4. Arbeitsgerät nach einem der Ansprüche 1 bis 3,
**dadurch gekennzeichnet, dass** das Gehäuse (11) ein Getriebegehäuse ist, in dem ein Antriebselement (15) ein drehfest mit der Antriebswelle (18) verbundenes Antriebsrad (16) antreibt.

5. Arbeitsgerät nach einem der Ansprüche 1 bis 4,
**dadurch gekennzeichnet, dass** mindestens zwei Werkzeuge vorgesehen sind, die über jeweils einen Exzenterabschnitt (20) angetrieben sind.

6. Arbeitsgerät nach Anspruch 5,
**dadurch gekennzeichnet, dass** die beiden Exzenterabschnitte (20) auf gegenüberliegenden Seiten des Gehäuses (11) angeordnet sind.

7. Arbeitsgerät nach Anspruch 5 oder 6,
**dadurch gekennzeichnet, dass** die beiden Exzenterabschnitte (20) an zwei Antriebswellen (18) ausgebildet sind.

8. Arbeitsgerät nach einem der Ansprüche 1 bis 7,
**dadurch gekennzeichnet, dass** mindestens ein Exzenterabschnitt (20) separat von dem konzentrisch zur Drehachse (22) verlaufenden Abschnitt (23) der Antriebswelle (18) ausgebildet und an dem Abschnitt (23) fixiert ist.

9. Arbeitsgerät nach einem der Ansprüche 1 bis 8,
**dadurch gekennzeichnet, dass** ein konzentrisch zur Drehachse (22) verlaufender Abschnitt (23) vorgesehen ist, der auf gegenüberliegenden Seiten des Gehäuses (11) aus dem Gehäuse (11) ragt.

10. Arbeitsgerät nach einem der Ansprüche 1 bis 9,
**dadurch gekennzeichnet, dass** die Winkellage des Exzenterabschnitts (20) an dem Antriebsrad (16) einstellbar ist.

11. Arbeitsgerät nach Anspruch 10,
**dadurch gekennzeichnet, dass** die Antriebswelle (18) in das Antriebsrad (16) eingepresst ist.

12. Arbeitsgerät nach einem der Ansprüche 1 bis 11,
**dadurch gekennzeichnet, dass** der parallel zur Drehachse (22) gemessene Abstand (c) der Pleuel (21) an den Verbindungen mit den Exzenterabschnitten (20) und der parallel zur Drehachse (22) gemessene Abstand (d) der Pleuel (21) an den Verbindungen mit den Werkzeugen gleich groß sind.

13. Arbeitsgerät nach einem der Ansprüche 1 bis 12,
**dadurch gekennzeichnet, dass** das Arbeitsgerät (1) ein Erntegerät ist, dessen Werkzeug mindestens einen Rechen (7) umfasst.

## Claims

1. Work device having a drive motor (2) which drives at least one drive shaft (18) mounted in a housing (11) so as to be rotatable about a rotation axis (22), wherein the drive shaft (18) has at least one eccentric portion (20) that drives a tool in a reciprocating manner; wherein the drive shaft (18) exits the housing (11) by way of a portion (23) running concentrically with the rotation axis (22); wherein the at least one eccentric portion (20) is disposed outside the housing (11); and wherein the drive shaft (18) drives the tool by way of a connecting rod (21) which is pivotably mounted on the tool and on the eccentric portion (20) of the drive shaft (18),
**characterized in that** two connecting rods (21) which drive in each case one tool are provided, and **in that** the two connecting rods (21) are disposed on opposite sides of the housing (11).

2. Work device according to Claim 1,
**characterized in that** the housing interior (31) of the housing (11) is sealed in relation to the environment.

3. Work device according to Claim 2,
**characterized in that** the drive shaft (18) by way of at least one bearing (17) is rotatably mounted in the housing (11), wherein the bearing (17) seals the housing interior (31) in relation to the environment.

4. Work device according to one of Claims 1 to 3,
**characterized in that** the housing (11) is a gearbox housing in which a drive element (15) drives a drive wheel (16) that is connected in a rotationally fixed manner to the drive shaft (18).

5. Work device according to one of Claims 1 to 4,
**characterized in that** at least two tools are provided, each of which being driven in each case by way of one eccentric portion (20).

6. Work device according to Claim 5,
**characterized in that** the two eccentric portions (20) are disposed on opposite sides of the housing (11).

7. Work device according to Claim 5 or 6,
**characterized in that** the two eccentric portions (20) are configured on two drive shafts (18).

8. Work device according to one of Claims 1 to 7,
**characterized in that** at least one eccentric portion (20) is configured separately from that portion (23) of the drive shaft (18) that runs concentrically with the rotation axis (22) and is fixed to that portion (23).

9. Work device according to one of Claims 1 to 8,
**characterized in that** a portion (23) running concentrically with the rotation axis (22) is provided, said portion (23) protruding from the housing (11) on opposite sides of the housing (11).

10. Work device according to one of Claims 1 to 9,
**characterized in that** the angular position of the eccentric portion (20) on the drive wheel (16) is adjustable.

11. Work device according to Claim 10,
**characterized in that** the drive shaft (18) is press-fitted into the drive wheel (16).

12. Work device according to one of Claims 1 to 11,
**characterized in that** the spacing (c) of the connecting rods (21), measured parallel to the rotation axis (22), at the connections to the eccentric portions (20), and the spacing (d) of the connecting rods (21), measured parallel to the rotation axis (22), at the connections to the tools are identically sized.

13. Work device according to one of Claims 1 to 12,
**characterized in that** the work device (1) is a harvesting device, the tool thereof comprising at least one rake (7).

## Revendications

1. Appareil de travail comportant un moteur d'entraînement (2) qui comprend au moins un arbre d'entraînement (18) monté à rotation autour d'un axe de rotation (22) dans un carter (11), l'arbre d'entraînement (18) présentant au moins une partie excentrique (20) qui entraîne un outil en va-et-vient,
l'arbre d'entraînement (18) sortant du carter (11) par une partie (23) s'étendant de manière concentrique par rapport à l'axe de rotation (22), l'au moins une partie excentrique (20) étant disposée à l'extérieur du carter (11) et l'arbre d'entraînement (18) entraînant l'outil par le biais d'une bielle (21) qui est montée pivotante sur l'outil et sur la partie excentrique (20) de l'arbre d'entraînement (18),
**caractérisé en ce que** deux bielles (21) sont prévues, lesquelles entraînent respectivement un outil et **en ce que** les deux bielles (21) sont disposées sur des côtés opposés du carter (11).

2. Appareil de travail selon la revendication 1,
**caractérisé en ce que** l'espace intérieur (31) du carter (11) est rendu étanche par rapport à l'environnement.

3. Appareil de travail selon la revendication 2,
**caractérisé en ce que** l'arbre d'entraînement (18) est monté rotatif dans le carter (11) par le biais d'au moins un palier (17), le palier (17) rendant l'espace intérieur de carter (31) étanche par rapport à l'environnement.

4. Appareil de travail selon l'une des revendications 1 à 3,
**caractérisé en ce que** le carter (11) est un carter de transmission dans lequel un élément d'entraînement (15) entraîne une roue d'entraînement (16) reliée de manière solidaire en rotation à l'arbre d'entraînement (18).

5. Appareil de travail selon l'une des revendications 1 à 4,
**caractérisé en ce qu'**au moins deux outils sont prévus, lesquels sont entraînés respectivement par le biais d'une partie excentrique (20).

6. Appareil de travail selon la revendication 5,
**caractérisé en ce que** les deux parties excentriques (20) sont disposées sur des côtés opposés du carter (11).

7. Appareil de travail selon la revendication 5 ou 6,
**caractérisé en ce que** les deux parties excentriques (20) sont réalisées sur deux arbres d'entraînement (18).

8. Appareil de travail selon l'une des revendications 1 à 7,
**caractérisé en ce qu'**au moins une partie excentrique (20) est réalisée séparément de la partie (23) de l'arbre d'entraînement (18) s'étendant de manière concentrique par rapport à l'axe de rotation (22) et est fixée à la partie (23).

9. Appareil de travail selon l'une des revendications 1 à 8,
**caractérisé en ce qu'**une partie (23) s'étendant de manière concentrique par rapport à l'axe de rotation (22) est prévue, laquelle fait saillie hors du carter (11) sur des côtés opposés du carter (11).

10. Appareil de travail selon l'une des revendications 1 à 9,
**caractérisé en ce que** la position angulaire de la partie excentrique (20) sur la roue d'entraînement (16) est réglable.

11. Appareil de travail selon la revendication 10,
**caractérisé en ce que** l'arbre d'entraînement (18) est enfoncé dans la roue d'entraînement (16).

12. Appareil de travail selon l'une des revendications 1 à 11,
**caractérisé en ce que** la distance (c), mesurée parallèlement à l'axe de rotation (22), entre les bielles (21) au niveau des liaisons aux parties excentriques (20) et la distance (d), mesurée parallèlement à l'axe de rotation (22), entre les bielles (21) au niveau des liaisons aux outils sont égales.

13. Appareil de travail selon l'une des revendications 1 à 12,
**caractérisé en ce que** l'appareil de travail (1) est un appareil de récolte dont l'outil comprend au moins un râteau (7).
